# EUROPEAN PATENT SPECIFICATION

(11) **EP 2 324 991 B1**
(45) Date of publication and mention of the grant of the patent: **27.11.2013**
(21) Application number: 10251609.3
(22) Date of filing: 17.09.2010
(51) Int. Cl.: B29C 63/04, B41F 16/00, B44C 1/17, B29C 65/48

(54) **Sheet bonding method and sheet bonding apparatus**
Verfahren und Vorrichtung zur Verklebung von Folien
Méthode et appareil pour le collage de feuilles

(30) Priority: 19.11.2009 JP 2009264099; 24.05.2010 JP 2010118459
(43) Date of publication of application: 25.05.2011
(73) Proprietor: Navitas Co. Ltd., Sakai-shi, Osaka 590-0823 (JP)
(72) Inventor: Nakamura, Koichi, Osaka 590-0823 (JP); Kawakami, Takashi, Osaka 590-0823 (JP)
(74) Representative: Butler, Daniel James

(56) References cited:
- EP-A1- 1 658 905
- DE-A1- 19 812 625
- DE-A1- 19 832 323
- US-A- 2 235 514
- US-A- 5 858 159

## Description

### CROSS-REFERENCE TO RELATED APPLICATION

This application is also based upon and claims the benefit of priority from Japanese Patent application 2009-264099, filed on November 19, 2009; and Japanese Patent application 2010-118459, filed on May 24, 2010.

### FIELD

This specification relates to a sheet bonding method for bonding a thermal adhesive sheet to a surface of a workpiece, a sheet bonding apparatus, a laminate product, and a transfer-printed product.

### BACKGROUND

(1) An apparatus that bonds a thermal adhesive sheet to a surface of a workpiece by pressing the thermal adhesive sheet against the workpiece with a heated rubber member is known.
(2) An apparatus is also known e.g. from EP-A-1658905, which includes a lower chamber member in which a workpiece is placed, an upper chamber member placed above the lower chamber member so as to hold a thermal adhesive sheet therebetween, a heating section that heats the thermal adhesive sheet held between both chamber members, a vacuum section that draws a vacuum in a space inside the lower chamber member partitioned off by the thermal adhesive sheet, and a heater positioned around the workpiece. This apparatus bonds the thermal adhesive sheet to the surface of the workpiece by applying heat to the thermal adhesive sheet with the heater, while causing the thermal adhesive sheet to closely attach to the surface of the workpiece by way of the vacuum section.

However, with the apparatus (1), the thermal adhesive sheet is pressed against the workpiece with a rubber member. If the workpiece includes, for example, an undercut portion or recess portion, the rubber member cannot make contact with the undercut portion or recess portion. The thermal adhesive sheet thus cannot be bonded to the undercut portion or recess portion.

The apparatus (2) draws a vacuum in the space on the side of the workpiece partitioned off by the thermal adhesive sheet thereby to cause the thermal adhesive sheet to closely attach to the workpiece. Even if the workpiece includes an undercut portion or recess portion, the thermal adhesive sheet can be closely attached to the workpiece. However, the apparatus (2) still cannot heat the thermal adhesive sheet favorably enough depending on the shape of the workpiece, and cannot bond part of the thermal adhesive sheet to the workpiece.

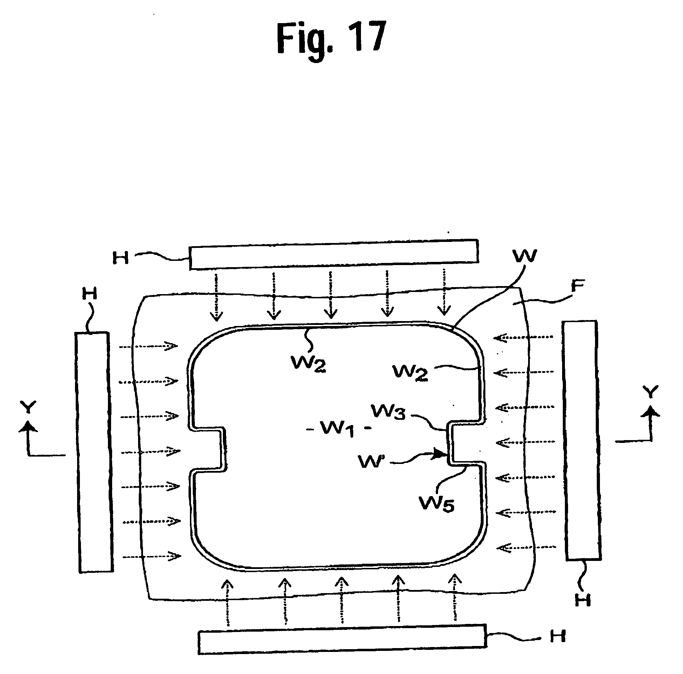

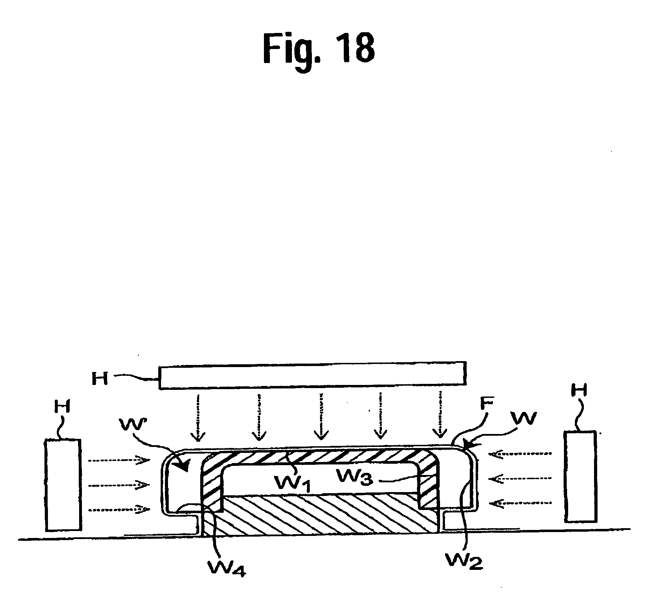

That is, as shown in Fig. 17 and Fig. 18, while the apparatus (2) can sufficiently heat an upper face W₁ of the workpiece W opposite the heater H or surrounding side faces W₂, the apparatus cannot sufficiently heat an inner face W₃ of a cutout (recess) portion W' that is distanced from the heater H. The apparatus (2) also cannot sufficiently heat surfaces that do not face the heater H, such as a lower face W₄ of the periphery of the workpiece W, or a side face W₅ of the cutout portion W'. In particular, the apparatus (2) cannot sufficiently heat the lower face W₄ and the side face W₅, because of which bonding cannot be achieved favourably on the lower face W₄ and the side face W₅ of the workpiece W.

A possible measure that can be taken to solve this problem is to raise the temperature of the heater H or increase the heating time. However, this will overheat the upper face W₁ directly facing the heater H or the side faces W₂, which may lead to a bonding failure of the thermal adhesive sheet F.

### SUMMARY

To solve the problem described above, this specification relates to a technique with which a thermal adhesive sheet can be favourably bonded to a surface of a workpiece irrespective of the surface contour of the workpiece.

According to a first aspect of the invention there is provided a sheet bonding method as claimed in claim 1. According to a second aspect of the invention there is provided a sheet bonding apparatus as claimed in claim 7.

This specification relates to a sheet bonding method for bonding a thermal adhesive sheet having an adhesive layer on one side thereof to a workpiece, the method including: a closely attaching step of closely attaching the thermal adhesive sheet to a surface of the workpiece to closely attach the adhesive layer to the surface of the workpiece; and a steam supply step of supplying steam to a space around the workpiece so as to heat the adhesive layer by conduction of heat from the steam, thereby tobond the thermal adhesive sheet to the workpiece.

This specification relates to a sheet bonding apparatus for bonding a thermal adhesive sheet having an adhesive layer on one side thereof to a workpiece, the apparatus including: a close attachment apparatus that closely attaches the thermal adhesive sheet to a surface of the workpiece to closely attach the adhesive layer to the surface of the workpiece; and a steam supply apparatus that supplies steam to a space around the workpiece so as to heat the adhesive layer by conduction of heat from the steam, thereby to bond the thermal adhesive sheet to the workpiece.

This specification relates to a laminate product including a workpiece, and a thermal adhesive sheet bonded to the workpiece by the sheet bonding method described above.

This specification relates to a transfer-printed product including a workpiece, and a to-be-transferred layer and an adhesive layer that are those of a thermal adhesive sheet including a base sheet, and a peel layer, a to-be-transferred layer, and an adhesive layer sequentially laminated on the base sheet, the thermal adhesive sheet being bonded to the workpiece by the above sheet bonding method.

### DESCRIPTION OF THE DRAWINGS

Fig. 1 is a schematic cross sectional view of a sheet bonding apparatus according to a first embodiment which is not part of the invention;
Fig. 2 is a schematic cross sectional view of a steam supply apparatus in the sheet bonding apparatus;
Fig. 3 is a cross sectional view of the thermal adhesive sheet;
Fig. 4 is a flowchart for explaining a sheet bonding method;
Fig. 5 is a flowchart for explaining a closely attaching step;
Fig. 6 is a schematic cross sectional view showing a state in which the thermal adhesive sheet closely attaches to a workpiece;
Fig. 7 is a schematic cross sectional view showing a state in which steam is supplied;
Fig. 8 is a cross sectional view taken along the line X-X of Fig. 7;
Fig. 9 is a schematic cross sectional view of a sheet bonding apparatus according to a second embodiment which is part of the invention;
Fig. 10 is a cross sectional view taken along the line Z-Z of Fig. 9;
Fig. 11 is a top plan view of a steam plate;
Fig. 12 is a flowchart for explaining a sheet bonding method;
Fig. 13 is a schematic cross sectional view showing how the thermal adhesive sheet is disposed;
Fig. 14 is a flowchart for explaining a closely attaching step;
Fig. 15 is a schematic cross sectional view showing a state in which the thermal adhesive sheet closely attaches to a workpiece;
Fig. 16 is a schematic cross sectional view showing a state in which steam is supplied;
Fig. 17 is a plan view showing the problems in a conventional apparatus; and
Fig. 18 is a cross sectional view taken along the line Y-Y of Fig. 17.

### DETAILED DESCRIPTION

### (First Embodiment, which is not part of the invention)

The sheet bonding apparatus 1 according to a first embodiment will be hereinafter described.

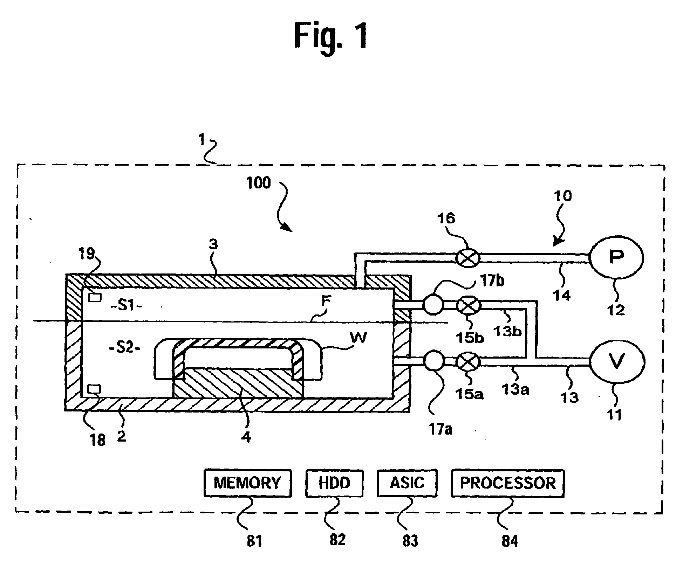

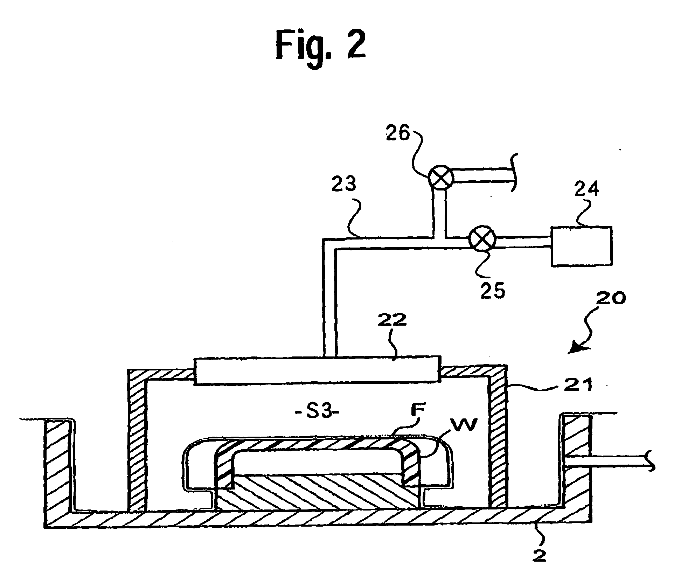

The sheet bonding apparatus 1 according to the present embodiment includes a close attachment apparatus 100 shown in Fig. 1 and a steam supply apparatus 20 shown in Fig. 2.

The close attachment apparatus 100 closely attaches a thermal adhesive sheet F to a surface of a workpiece W, so as to cause an adhesive layer laminated on one side of a base sheet of the thermal adhesive sheet F to closely attach to the surface of the workpiece W.

The close attachment apparatus 100 includes a lower chamber member 2 as a box-like second chamber member with its upper face being open, and an upper chamber member 3 disposed above the lower chamber member 2, as a box-like first chamber member with its lower face being open.

The close attachment apparatus 100 can be switched between a state in which the upper chamber member 3 is disposed above the lower chamber member 2 so that a box-like closed space is formed by both the chamber members 2 and 3, and a state in which the upper chamber member 3 is separated from the upper part of the lower chamber member 2 so as to open the top of the lower chamber member 2. Here, the upper chamber member 3 can be retracted from the lower chamber member 2 in any direction. It need not necessarily be retracted vertically upwards, but may be configured to move upwards first then be retracted sideways, or retracted diagonally upwards.

A workpiece placement table 4 is provided at the bottom inside the lower chamber member 2 so that a workpiece W can be placed on the placement table 4.

The thermal adhesive sheet F is fed so as to close the opening on the upper face of the lower chamber member 2. When the upper chamber member 3 is positioned above the lower chamber member 2, both the chamber members 2 and 3 close, with the thermal adhesive sheet F being held between the upper face of the lower chamber member 2 and the lower face of the upper chamber member 3 as shown in Fig. 1. In this state, the thermal adhesive sheet F partitions the interior into a space inside the upper chamber member 3 and a space inside the lower chamber member 2.

This close attachment apparatus 100 is provided with a pressure control apparatus 10. This pressure control apparatus 10 includes a vacuum pump 11, a compressed air pump 12, a vacuum passage 13 diverging from the vacuum pump 11 to communicate with the interiors of the lower chamber member 2 and the upper chamber member 3, and a compressed air passage 14 extending from the compressed air pump 12 and communicating with the interior of the upper chamber member 3. The pressure control apparatus 10 also includes on/off valves 15a and 15b and flow regulating valves 17a and 17b disposed in branch passages 13a and 13b of the vacuum passage 13, an on/off valve 16 disposed in the compressed air passage 14, and pressure sensors 18 and 19 disposed inside the chamber members 2 and 3.

The sheet bonding apparatus 1 further includes MEMORY 81, HDD (HardDiskDrive) 82, ASIC (Application Specific Integrated Circuit) 83, and PROCESSOR 84. MEMORY 81 and HDD 82 store various information and programs used for the processing performed by the sheet bonding apparatus 1. ASIC 83 is a circuit that executes specific functions. ASIC 83 can execute some or all of the functions realized by PROCESSOR 84.

PROCESSOR 84 executes programs stored in MEMORY 83 and HDD 82 to realize various functions. PROCESSOR 84 can also be realized by a CPU (Central Processing Unit) and an MPU (Micro Processing Unit). PROCESSOR 84 controls the entire pressure control apparatus 10 as well as the entire sheet bonding apparatus 1.

More specifically, PROCESSOR 84 controls actions of the chamber members 2 and 3, the vacuum pump 11, the compressed air pump 12, the on/off valves 15a, 15b, and 16, and the flow regulating valves 17a and 17b. PROCESSOR 84 also controls actions of a partition member 21, a steam generator 22, a steam supply source 24, a steam supply valve 25, and a drain release valve 26, which will all be described later.

The steam supply apparatus 20 shown in Fig. 2 supplies steam to a space around the workpiece W to which the thermal adhesive sheet F closely attaches, thereby heating the adhesive layer by heat conduction from the steam through the base sheet to bond the thermal adhesive sheet F to the workpiece W.

The s team supply apparatus 20 is placed inside the lower chamber member 2, in a state in which the upper chamber member 3 is separated from the upper part of the lower chamber member 2. The steam supply apparatus 20 includes the partition member 21 that encloses the workpiece W on the placement table 4, and the steam generator 22 disposed in an upper wall portion of this partition member 21. The steam supplyapparatus 20 further includes apipemember 23 connecting the steam generator 22 and the steam supply source 24, and the steam supply valve 25 and the drain release valve 26 provided between the steam generator 22 and the steam supply source 24.

When the steam supply apparatus 20 is positioned inside the lower chamber member 2, a closed space S3 is formed around the workpiece W, and steam is supplied into this space S3 from the steam generator 22.

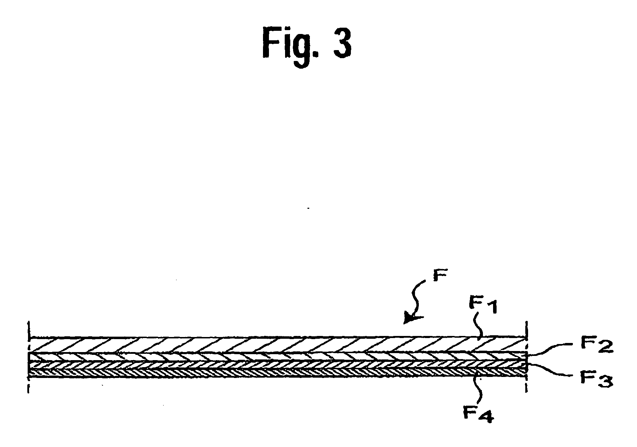

Here, the thermal adhesive sheet F is a transfer film. As shown in Fig. 3, the sheet F is configured to have a peel layer F₂, a picture layer F₃ as a to-be-transferred layer, and the adhesive layer F₄ sequentially laminated on one side (lower side in the example shown in Fig. 3) of the base sheet F₁. The steam supplied from the steam generator 22 is at a temperature at which the steam can melt the adhesive forming the adhesive layer F₄ when it contacts the thermal adhesive sheet F from the base sheet F₁ side through the base sheet F₁, the peel layer F₂, and the picture layer F₃.

This temperature of the steam is about 120 to 200°C in the case with commonly used thermal adhesive sheets. The temperature, however, should not be limited to this range and may be set to an optimal value depending on the material and thickness of each layer constituting the thermal adhesive sheet so that the adhesive can be melted. For the thermal adhesive sheet, those that stretch at normal temperatures, those that do not stretch at normal temperatures, those that soften when heated, and various other thermal adhesive sheets can be used.

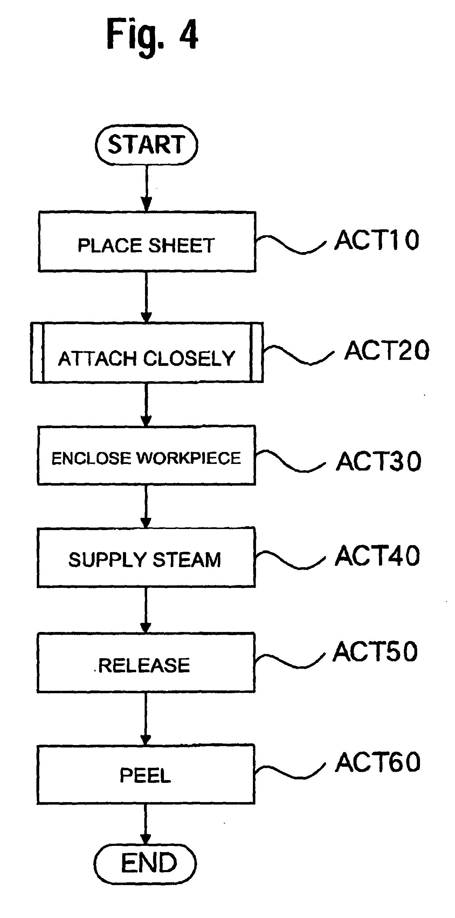

Next, the sheet bonding method by this sheet bonding apparatus 1 will be described with reference to the flowchart of Fig. 4.

First, an operator places a workpiece W on the workpiece placement table 4 inside the lower chamber member 2 and supplies a thermal adhesive sheet F with its base sheet F₁ side upwards on the upper face of the lower chamber member 2, as shown in Fig. 1. In this state, the sheet bonding apparatus 1 positions the upper chamber member 3 above the lower chamber member 2 and closes both the chamber members 2 and 3, with the thermal adhesive sheet F being held between the upper face of the lower chamber member 2 and the lower face of the upper chamber member 3 (ACT10: sheet placement step).

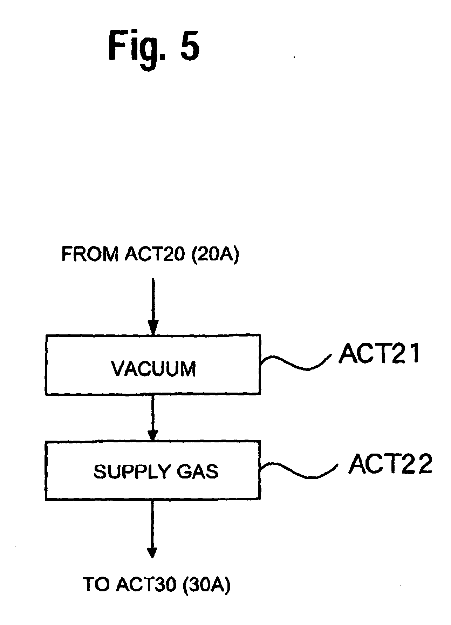

Next, the sheet bonding apparatus 1 carries out a closely attaching step ACT20 (see Fig. 5) to closely attach the thermal adhesive sheet F to the workpiece W.

In the closely attaching step ACT20, the sheet bonding apparatus 1 first opens the on/off valves 15a and 15b which are disposed in the branch passages 13a and 13b of the vacuum passage 13, respectively. With the on/off valve 16 disposed in the compressed air passage 14 being closed, the sheet bonding apparatus 1 activates the vacuum pump 11, thereby drawing a vacuum at the same time in the space S2 (second space) inside the lower chamber member 2 and in the space S1 (first space) inside the upper chamber member 3 that are partitioned off from each other by the thermal adhesive sheet F. At this time, the sheet bonding apparatus 1 adjusts the flow regulating valves 17a and 17b while monitoring the vacuum pressure inside the chamber members 2 and 3 with the pressure sensors 18 and 19, so as to adjust the suction rate of air inside the chamber members 2 and 3. The sheet bonding apparatus 1 thereby adjusts the vacuum pressure inside the chamber members 2 and 3 so as to maintain the thermal adhesive sheet F substantially horizontal (ACT21: vacuum step). In the present embodiment, the sheet bonding apparatus 1 thus adjusts the vacuum pressure inside the chamber members 2 and 3 by adjusting the suction rate of air inside the chamber members 2 and 3. Therefore, as compared to a method in which the vacuum pressure inside the chamber members 2 and 3 is adjusted by releasing the pressure inside the vacuumed chamber members 2 and 3, excessive sucking of air inside the chamber members 2 and 3 is prevented and energy efficiency is thereby improved.

Next, the sheet bonding apparatus 1 closes the on/off valves 15a and 15b on both the branch passages 13a and 13b of the vacuum passage 13, and stops the vacuum pump 11. The sheet bonding apparatus 1 then opens the on/off valve 16 on the compressed air passage 14 and activates the compressed air pump 12, thereby to supply compressed air only to the space S1 inside the upper chamber member 3 partitioned off by the thermal adhesive sheet F (ACT22: gas supply step).

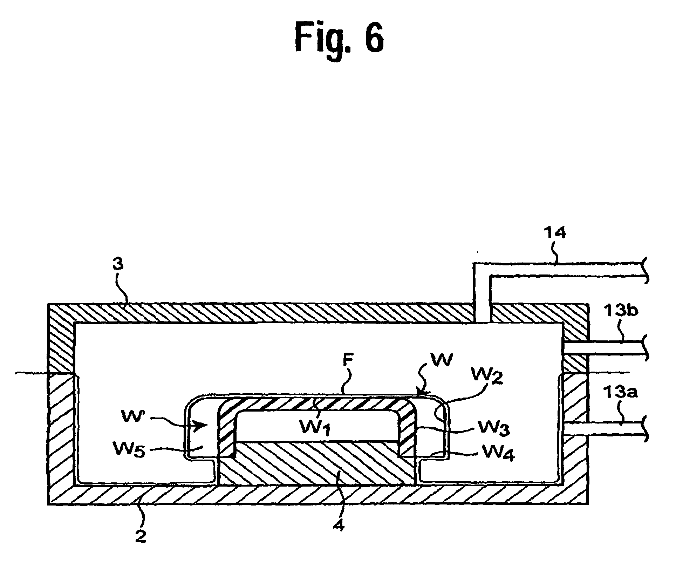

Thereby, while the space below the thermal adhesive sheet F is in a vacuum state, the space thereabove is supplied with compressed air, creating a large pressure difference between both sides of the thermal adhesive sheet F. This pressure difference causes the thermal adhesive sheet F to closely attach to the surface of the workpiece W as shown in Fig. 6. Since air is removed from between the workpiece W and the thermal adhesive sheet F in advance, the thermal adhesive sheet F fully and closely attaches not only to the upper face W₁ or side faces W₂ of the workpiece W but also, for example, to the lower face W₄ of a side portion or an inner face W₃ and a side face W₅ of a cutout portion W'.

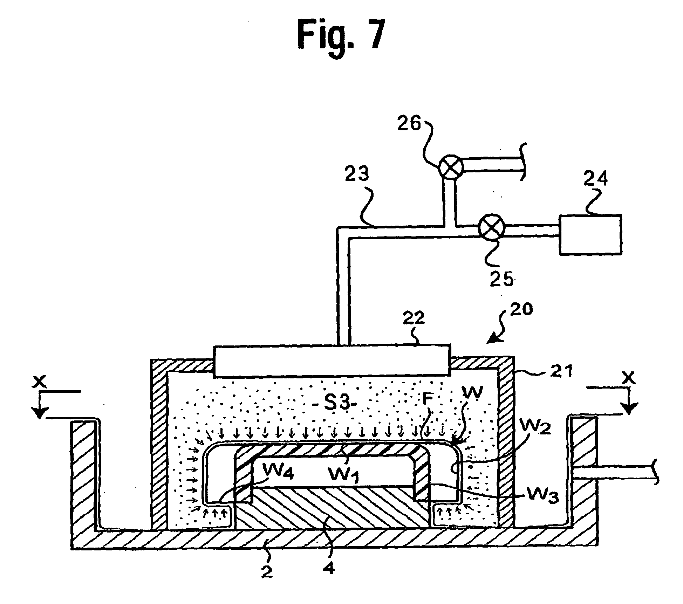

Next, with the upper chamber member 3 being separated from the upper part of the lower chamber member 2, the sheet bonding apparatus 1 positions the steam supply apparatus 20 inside the lower chamber member 2 so as to enclose the workpiece W on the placement table 4 as shown in Fig. 7. The partition member 21 of the apparatus 20 and the steam generator 22 provided in the upper part thereof form a closed space S3 around the workpiece w (ACT30: enclosure step).

In this state, the sheet bonding apparatus 1 ejects steam at high pressure from the steam generator 22 to supply steam to the space S3 (ACT40: steam supply step). The temperature of this steam is set to a value at which the heat thereof can melt the adhesive forming the adhesive layer F₄ of the thermal adhesive sheet F through the base sheet F₁, the peel layer F₂, and the picture layer F₃.

Therefore, when the steam contacts the base sheet F₁ of the thermal adhesive sheet F closely attaching to the surface of the workpiece W inside the space S3 , the adhesive layer F₄ of the thermal adhesive sheet F is heated by the heat of the steam until the adhesive melts. By the adhesive layer F₄ being meltedwhile the sheet F closely attaches to the surface of the workpiece W due to the large pressure difference, the picture layer F₃ of the sheet F is transferred onto the surface of the workpiece W.

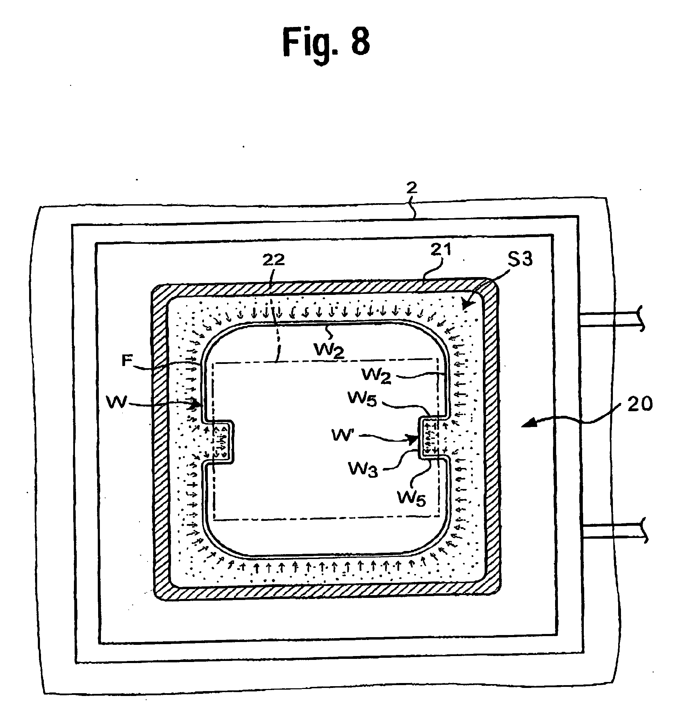

At this time, the steam ejected at high pressure to around the workpiece W is supplied to all corners inside the space S3, conducting heat to the lower face W₄ of the side portion or the inner face W₃ and side face W₅ of the cutout portion W' of the workpiece W as shown in Fig. 8. Thus the steam heats corresponding parts of the thermal adhesive sheet F closely attaching to these parts to the same extent as other parts. Supplying steam to the space around the workpiece W here means heating the workpiece W with steam in a steam environment.

Thereby the surface of the thermal adhesive sheet F closely attaching to the workpiece W is heated substantially uniformly, which enables good transfer on the lower face W₄ of the side portion or the side face W₅ of the cutout portion W', which could not be heated sufficiently by conventional techniques, to the same extent as the upper face W₁ or side faces W₂.

In addition, the steam that appliedheat to the thermal adhesive sheet F turns into water droplets, which adhere to the thermal adhesive sheet F. These water droplets remove heat by vaporization or otherwise from the workpiece W, so that deformation of the workpiece W can be prevented despite the heating of the workpiece W with steam.

After the steam supply step ACT40, the sheet bonding apparatus 1 opens the drain release valve 26 to open the space around the workpiece W to atmosphere, thereby discharging the steam ejected at high pressure to around the workpiece W from the drain release valve26 (ACT50:release step). Thereby the amount of steam remaining around the workpiece W after the steam supply step ACT40 can be reduced, which decreases the amount of water droplets adhering to the thermal adhesive sheet F. This, accordingly, leads to good handling properties of the workpiece W in the next step ACT60.

In the present embodiment, the drain release valve 26 is provided in midway on the path for supplying steam from the steam supply source 2 4 to the partition member 21. The number of components is thus lower than in a configuration with the drain release valve 26 being provided outside of the path.

After the release step ACT50, the sheet bonding apparatus 1 moves the steam supply apparatus 20 upwards. The operator removes the workpiece W from the placement table 4. The operator then peels the peel layer F₂ from the workpiece W so as to take the workpiece W with the picture layer F₃ bonded to the surface thereof, in other words, the workpiece W as a transfer-printed product having the picture layer F₃ transferred thereon, away from the peel layer F₂ (ACT60: peeling step).

PROCESSOR 84 executes a sheet bonding program stored in MEMORY 81 and controls various parts of the sheet bonding apparatus 1 to realize the steps ACT20 to ACT50.

While the apparatus 1 includes the compressed air pump 12 for supplying compressed air to the space inside the upper chamber member 3 in the present embodiment described above, the pump may be omitted, and the apparatus may instead include an on/off valve for opening the space inside the upper chamber member 3 in which a vacuum was drawn to atmosphere. If necessary, the upper chamber member 3 may include a heater for heating the thermal adhesive sheet F in advance and keeping the sheet softened in the state of Fig. 1. In the gas supply step ACT22, any suitable gas may be supplied into the upper chamber member 3 instead of air.

The steam supply apparatus 20 may include the partition member 21 and the steam generator 22 as separate parts. The apparatus 20 may further include a heater at the lower end face of the partition member 21 so as to melt-cut the portion of the thermal adhesive sheet F held under the partition member 21 with the heater after the transfer. This provides the effect of facilitating the operation of peeling the base sheet F₁ of the thermal adhesive sheet F from the surface of the workpiece W.

The partition member 21 of the steam supply apparatus 20 may be omitted and the steam generator 22 may be positioned directly on the upper face of the lower chamber member 2 so that steam is supplied to the entire space inside the chamber member 2.

### (Second Embodiment, according to the invention)

Next, the sheet bonding apparatus according to a second embodiment will be described.

The sheet bonding apparatus 1 according to the second embodiment is configured such that, after a thermal adhesive sheet is closely attached to the surface of a workpiece, a partition member forms a closed space around the workpiece on the workpiece placement table without separating the upper chamber member, and steam is supplied to this space.

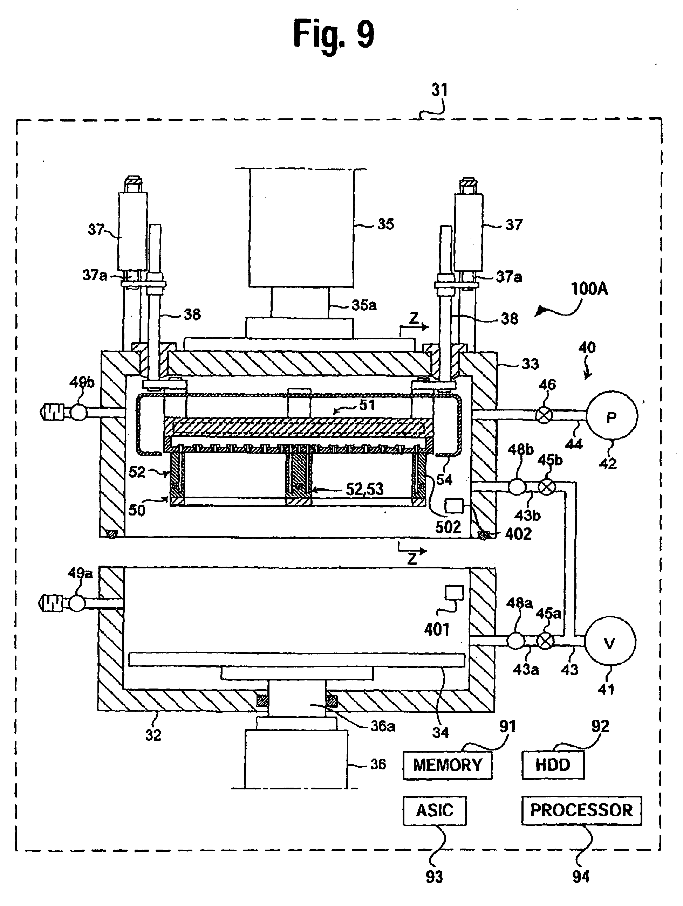

As shown in Fig. 9, the sheet bonding apparatus 31 of the second embodiment includes a close attachment apparatus 100A and a steam supply apparatus 50.

The close attachment apparatus 100A includes a lower chamber member 32 with its upper face being open, and an upper chamber member 33 with its lower face being open. The upper chamber member 33 is coupled to a rod portion 35a of a drive cylinder 35 so that it is configured to be movable in an up and down direction. Thereby, the close attachment apparatus 100A can be switched between a state in which both the chamber members 32 and 33 form a box-like closed space, and a state in which the upper chamber member 33 is separated from the lower chamber member 32 so that the opening on the upper face of the lower chamber member 32 is open.

The lower chamber member 32 includes a workpiece placement table 34 inside at the bottom so that a workpiece W can be placed on the placement table 34. The workpiece placement table 34 is coupled to a rod portion 36a of a drive cylinder 36 so that it is configured to be movable in an up and down direction. Thereby, the workpiece W on the workpiece placement table 34 can move in the up and down direction inside the lower chamber member 32. Driving of the workpiece placement table 34 is controlled, for example, by PROCESSOR 94.

The thermal adhesive sheet F is fed so as to close the opening on the upper face of the lower chamber member 32. With the upper chamber member 33 being separated from the lower chamber member 32 so as to open the top of the lower chamber member 32, the thermal adhesive sheet F is fed onto the upper face of the lower chamber member 32. The upper chamber member 33 is then moved downwards so that both chamber members 32 and 33 are closed, with the thermal adhesive sheet F being held therebetween. Feeding of the thermal adhesive sheet F here can be achieved manually by the operator, or by any known sheet feeding mechanism controlled by PROCESSOR 94.

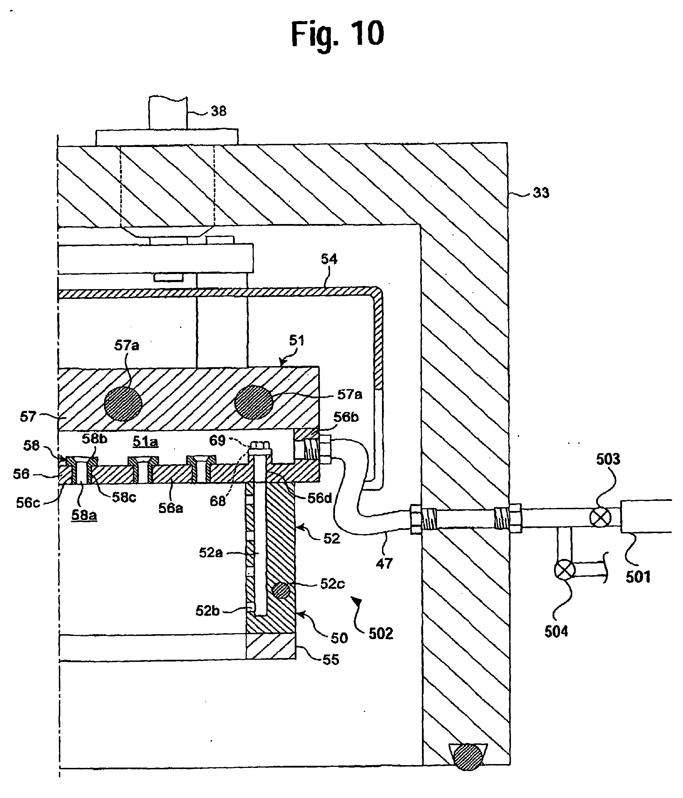

As shown in Fig. 10, the steam supply apparatus 50 includes a steam supply source 501, and a partition member 502 that encloses the workpiece W on the workpiece table 34 and supplies steam from the steam generator 501 to the space around the workpiece W.

The steam supply source 501 is disposed outside the upper chamber member 33. The partition member 502 is disposed inside the upper chamber member 33. The partition member 502 is formed in a box-like shape with a top plate 51 covering the upper face of the workpiece W on the workpiece placement table 34 and extending in a substantially horizontal direction, and side plates 52 covering the side faces of the workpiece W on the workpiece placement table 34 and extending in a substantially up and down direction.

The top plate 51 includes a steam plate 56 formed in a box-like shape with a substantially flat plate-like bottom face 56a and side faces 56b extending upwards from the periphery of the bottom face 56a. The top plate 51 also includes a heat disk 57 incorporated in the steam plate 56 so as to close the upper opening of the steam plate 56. In the top plate 51, a supply passage 51a is formed by the steam plate 56 and the heat disk 57 for supplying steam to the space inside the partition member 502. Steam is supplied to the supply passage 51a from the steam supply source 501 through a pipe member 47. Between the steam supply source 501 and partition member 502, a steam supply valve 503 and a drain release valve 504 are provided to the pipe member 47.

The top plate 51 is also formed with a plurality of apertures 56c in the bottom face 56a of the steam plate 56, with bored bolts 58 attached in the apertures 56c. The bored bolt 58 includes a through hole 58a inside. The bored bolt 58 is attached such that the shaft portion 58c thereof is inserted into the aperture 56c. The head portion 58b of the bored bolt 58 protrudes from the bottom face 56a of the steam plate 56. Thus the top plate 51 is formed with a plurality of steam jet holes 58a for ejecting steam from the supply passage 51a into the space inside the partition member 502.

In the top plate 51, inlet portions of steam from the supply passage 51a into the steam jet holes 58a are provided at a higher position than the bottom face 56a of the steam plate 56. Therefore, any water droplets as a result of steam precipitation inside the supply passage 51a during the supply of steam into the space inside the partition member 502 can be prevented from falling down into the space inside the partition member 502.

The heat disk 57 is formed by an aluminum plate, for example, and includes an incorporated heater 57a for heating the steam. The heater 57a incorporated in the heat disk 57 is configured such that the temperature thereof can be controlled by PROCESSOR 94 to be described later. The heat disk 57 is coupled to rod portions 37a of drive cylinders 37 (Fig. 9) fixed to the upper chamber member 33 via coupling rods 38 so that it is configured to be movable in the up and down direction. Thereby the steam supply apparatus 50 is supported by the upper chamber member 33 so as to be movable up and down. The steam supply apparatus 50 is provided with a protection cover 54 covering around the heat disk 57.

The side plate 52 is formed with a supply passage 52a therein for supplying steam to the space inside the partition member 502. This supply passage 52a extends in the up and down direction so as to communicate with the supply passage 51a formed in the top plate 51 via a communication passage 56d provided in the steam plate 56. The side plate 52 is also formed with a plurality of steam jet holes 52 b for ejecting steam from the supply passage 52a into the space inside the partition member 502.

The side plate 52 further includes an incorporated heater 52c for heating the steam. This heater 52c is configured such that the temperature thereof can be controlled by PROCESSOR 94 (see Fig. 9). The heater 52c provided to the side plate 52 and the heater 57a provided to the top plate 51 are configured such that their temperatures are controlled independently of each other.

Part of the side plate 52 forms a division plate 53 (Fig. 9) dividing the space inside the partition member 502 into two spaces. The division plate 53 is configured similarly to the side plate 52, i.e., includes supply passages for supplying steam respectively into the two spaces, steam jet holes for ejecting steam from the supply passages into the two spaces, and a heater incorporated therein for heating the steam. The heater is configured such that the temperature thereof can be controlled independently by PROCESSOR 94 to be described later. Thereby, picture transfer onto two workpieces W can be carried out under substantially the same conditions. A heat insulating material 55 having cushion properties is provided to the lower end faces of the side plate 52 and the division plate 53 so as to prevent the thermal adhesive sheet F from being melt-cut when the partition member 502 encloses the workpiece W.

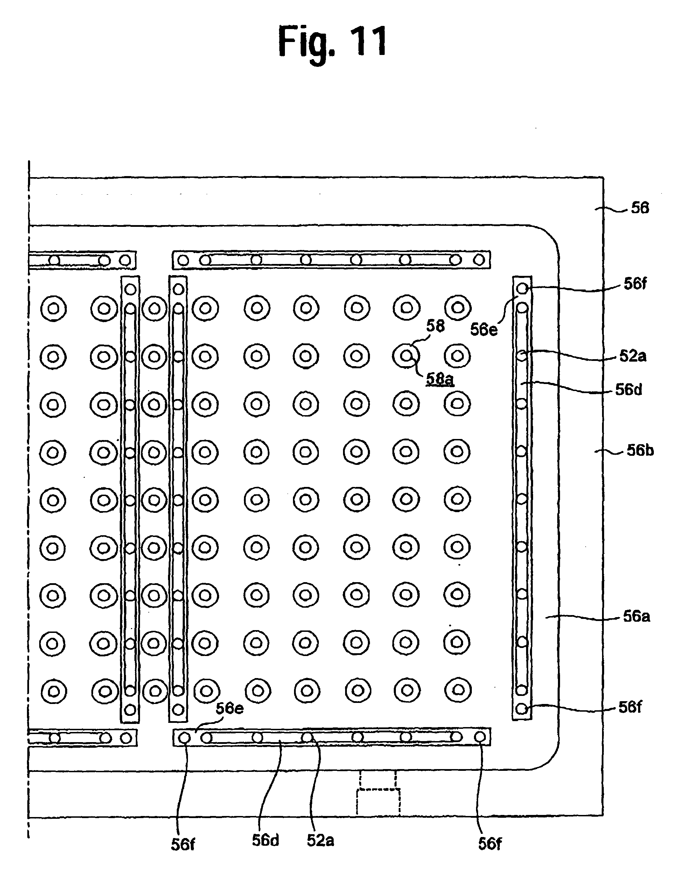

In the present embodiment, the inlet portion of the communication passage 56d provided in the steam plate 56 connecting from the supply passage 51a is formed to protrude from the bottom face 56a of the steam plate 56. As shown in Fig. 11, screw holes 56f are formed at both ends of the protruded portion 56e. A cover plate 68 closing the communication passage 56d can be disposed on the upper face of the protruded portion 56e as required as shown in Fig. 10, with fastening bolts 69 screwed into the screw holes 56f. Thereby, when steam is supplied to the space inside the partition member 502, steam can be supplied only from the top plate 51 and not from the side plate 52. The division plate 53 can be configured similarly to the side plate 52 so that no steam is supplied from the side plate 52.

The inner surface of the partition member 502 is provided with far infrared ceramic coating. More specifically, the steam plate 56, the side plate 52, and the division plate 53 forming the inner surface of the partition member 502 are provided with far infrared ceramic coating on their surfaces. This enables more efficient heating of the thermal adhesive sheet F.

Referring back to Fig. 9, the close attachment apparatus 100A includes a pressure control apparatus 40. The pressure control apparatus 40 includes a vacuum pump 41, a compressed air pump 42, a vacuum passage 43 diverging from the vacuum pump 41 to communicate with the interiors of the lower chamber member 32 and the upper chamber member 33, a compressed air passage 44 extending from the compressed air pump 42 and communicating with the interior of the upper chamber member 33, on/off valves 45a and 45b respectively disposed in branch passages 43a and 43b of the vacuum passage 43, and an on/off valve 46 disposed in the compressed air passage 44.

The pressure control apparatus 40 also includes flowregulating valves 48a and 48b which are disposed in branch passages 43a and 43b of the vacuum passage 43, respectively. The pressure control apparatus 40 further includes a release valve 49a for opening the space inside the lower chamber member 32 to atmosphere, and a release valve 49b for opening the space inside the upper chamber member 33 to atmosphere. The pressure control apparatus 40 includes pressure sensors 401 and 402 provided inside the chamber members 32 and 33.

PROCESSOR 94 controls the entire pressure control apparatus 40 as well as the entire sheet bonding apparatus 31. More specifically, PROCESSOR 94 controls actions of the drive cylinders 35, 36, and 37, the vacuum pump 41, the compressed air pump 42, the on/off valves 45a, 45b, and 46, the flow regulating valves 48a and 48b, the release valves 49a and 49b, the heaters 52c and 57a, the steam supply source 501, the steam supply valve 503, and the drain release valve 504.

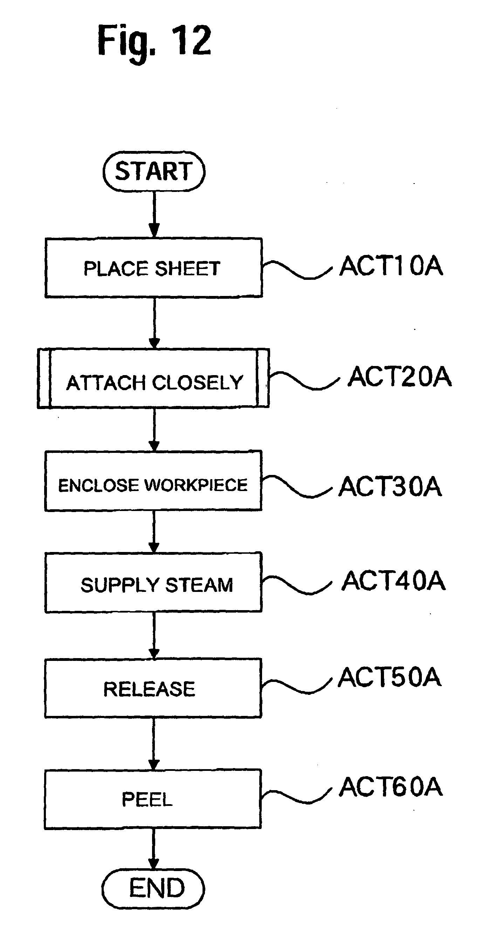

Next, the sheet bonding method by this sheet bonding apparatus 31 will be described with reference to the flowchart of Fig. 12.

First, the sheet bonding apparatus 31 separates the upper chamber member 33 from the lower chamber member 32 so as to open the top of the lower chamber member 32 as shown in Fig. 9. With the on/off valves 45a, 45b, and 46 and release valves 49a and 49b being closed, a workpiece W is placed on the workpiece placement table 34 such that the upper face thereof is positioned lower than the upper end face of the lower chamber member 33. An operator supplies a thermal adhesive sheet F to the upper face of the lower chamber member 32, with the base sheet F₁ side upwards.

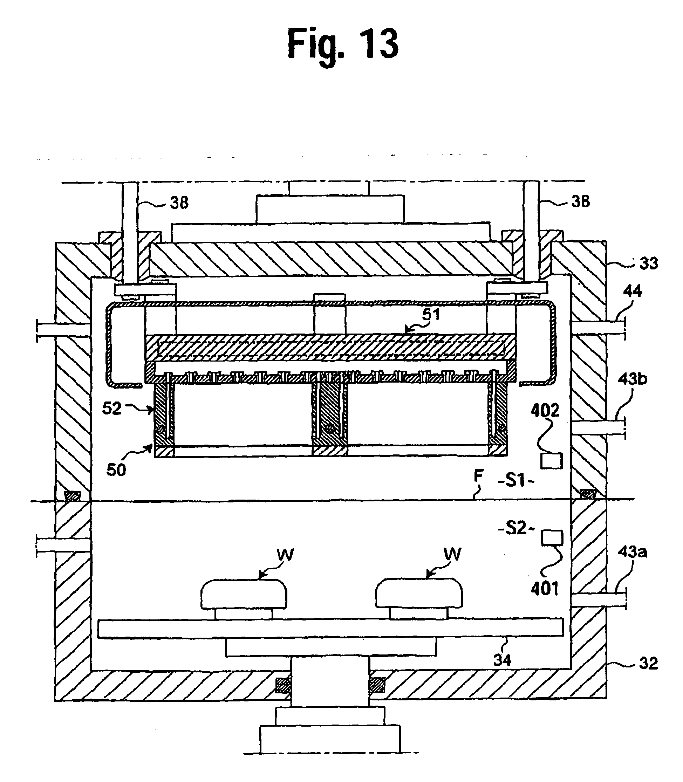

The sheet bonding apparatus 31 moves the upper chamber member 33 downwards with the lower end face of the steam supply apparatus 50, more specifically the lower end face of the partition member 502 being positioned higher than the lower end face of the upper chamber member 33 as shown in Fig. 13. The sheet bonding apparatus 31 thus closes both the chamber members 32 and 33 with the thermal adhesive sheet F being held between the upper face of the lower chamber member 32 and the lower face of the upper chamber member 33 (ACT10A: sheet placement step).

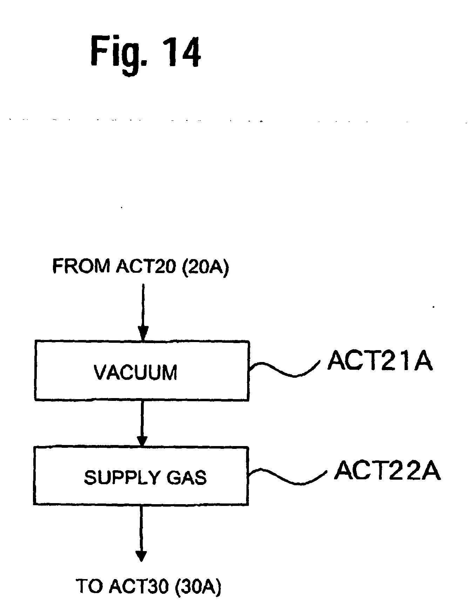

Next, the sheet bonding apparatus 31 carries out a closely attaching step ACT20A (see Fig. 14) to closely attach the thermal adhesive sheet F to the workpiece W.

In the closely attaching step ACT 20A, the sheet bonding apparatus 31 first opens the on/off valves 45a and 45b which are disposed in the branch passages 43a and 43b of the vacuum passage 43, respectively. The sheet bonding apparatus 31 then activates the vacuum pump 41, so as to draw a vacuum at the same time in the space S2 (second space) inside the lower chamber member 32 and in the space S1 (first space) inside the upper chamber member 33 that are partitioned off from each other by the thermal adhesive sheet F. At this time, the sheet bonding apparatus 31 adjusts the flow regulating valves 48a and 48b while monitoring the vacuum pressure inside the chamber members 32 and 33 with the pressure sensors 401 and 402, so as to adjust the suction rate of air inside the spaces S1 and S2 . The sheet bonding apparatus 31 thereby adjusts the vacuum pressure in the space S2 inside the lower chamber member 32 and the space S1 inside the upper chamber member 33 so as to maintain the thermal adhesive sheet F substantially horizontal (ACT21A: vacuum step). Therefore, the sheet F remains stretched between both chamber members 32 and 33.

Once the spaces S1 and S2 inside both the chamber members 32 and 33 are in a vacuum state, the sheet bonding apparatus 31 closes the on/off valve 45b while opening the on/off valve 46 disposed in the compressed air passage 44. The sheet bonding apparatus 31 then activates the compressed air pump 42 to supply compressed air only to the space S1 inside the upper chamber member 33 partitioned off by the thermal adhesive sheet F. In the present embodiment, although not limited to this, at the same time when activating the vacuum pump 42, the workpiece placement table 34 is moved upward until the table is substantially coplanar with the upper face of the lower chamber member 32 (ACT22A: gas supply step).

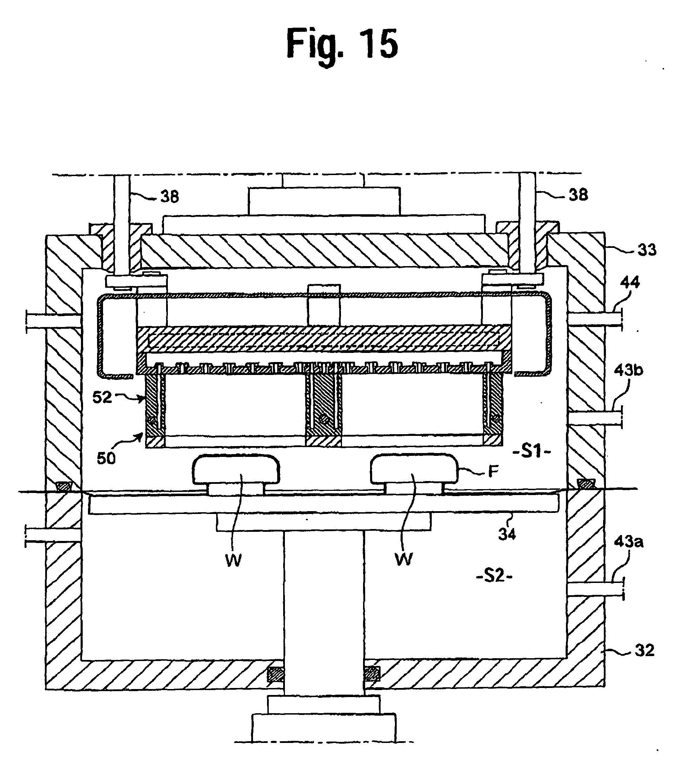

Thereby, while the space S2 below the thermal adhesive sheet F is in a vacuum state, compressed air is supplied to the space S1 thereabove, creating a large pressure difference between both sides of the thermal adhesive sheet F. This pressure difference causes the thermal adhesive sheet F to closely attach to the surface of the workpiece W as shown in Fig. 15. As already mentioned above, since air is removed from between the workpiece W and sheet F in advance, the thermal adhesive sheet F fully and closely attaches not only to the upper face or side faces of the workpiece W but also, for example, to the lower face of the side portion or the inner face and side face of the cutout portion.

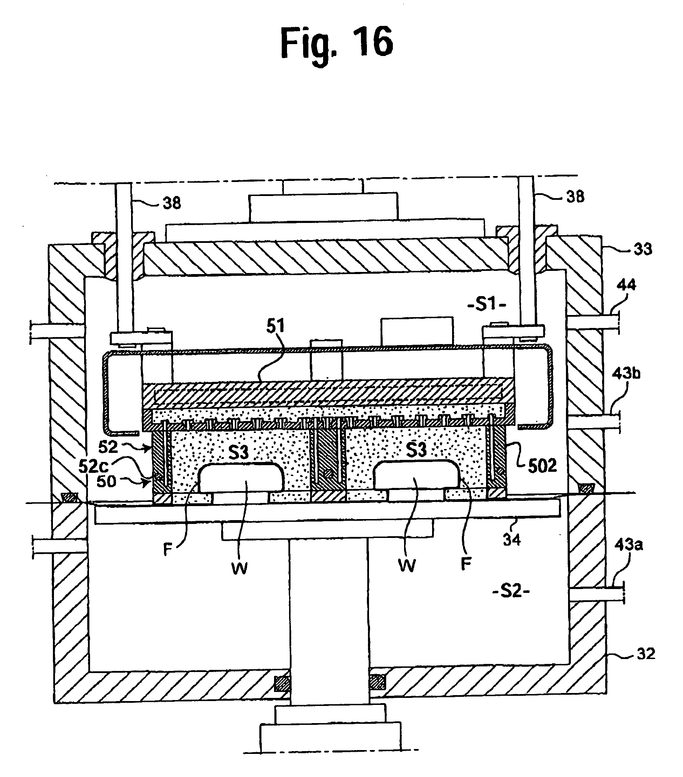

Next, the sheet bonding apparatus 31 closes the on/off valves 45a and 46 and deactivates the vacuum pump 41 and the compressed air pump 42 . The sheet bonding apparatus 31 then moves the partition member 502 downwards, without separating the upper chamber member 33 and keeping both the chamber members 32 and 33 closed, as shown in Fig. 16 (ACT30A: enclosure step). This partitionmember 502 forms a closed space S3 around the workpiece W.

The sheet bonding apparatus 31 then controls heating by the heaters 57a and 52c which are provided in the top plate 51, side plates 52, and division plate 53, respectively, and activates the steam supply source 501 to supply steam to the supply passages 51a and 52a, thereby ejecting steam at high pressure from the steam jet holes 58a and 52b and supplying steam to the space S3 (ACT40A:
steam supply step). The temperature of this steam is set to a value at which the heat thereof can melt the adhesive forming the adhesive layer F₄ of the thermal adhesive sheet F through the base sheet F₁, the peel layer F₂, and the picture layer F₃.

Therefore, when the steam contacts the base sheet F₁ inside the space S3, the heat of the steam heats the adhesive layer F₄ until the adhesive melts. Thus the adhesive layer F₄ is melted while the thermal adhesive sheet F closely attaches to the surface of the workpiece W due to the large pressure difference. In this way, the picture layer F₃ is transferred onto the surface of the workpiece W.

At this time, steam is supplied to all corners inside the space S3, conducting heat to the lower face of the side portion or the inner face and side face of the cutout portion of the workpiece W. The steam thus heats corresponding parts of the thermal adhesive sheet F closely attaching to these parts to the same extent as other parts.

Thereby the surfaces of various parts of the thermal adhesive sheet F closely attaching to the workpiece W are heated substantially uniformly, which enables good transfer on the lower face W₄ of the side portion or side face W₅ of the cutout portion W', which could not be heated sufficiently by conventional techniques, to the same extent as the upper face W₁ or side faces W₂.

In addition to raising the pressure inside the upper chamber member 33 with compressed air from the compressed air pump 42, steam is ejected at high pressure to around the workpiece W enclosed by the partition member 502. The pressure of steam supplied to the thermal adhesive sheet F is thus increased. As a result, the thermal adhesive sheet F can be heated favorably with steam. This eliminates the necessity of making the pressure inside the upper chamber member 33 extremely high, so that the pressure inside the upper chamber member 33 can be set not higher than a limit specified by law. In addition, the steam that applied heat to the thermal adhesive sheet F turns quickly into water droplets, which adhere to the thermal adhesive sheet F. These water droplets, after applying heat to the workpieceW, remove heat by vaporization from the workpiece W, thereby also contributing to prevention of thermal deformation of the workpiece W.

Portions of the thermal adhesive sheet F corresponding to the side faces of the workpiece W tend to bond less to the workpiece W than the portion corresponding to the top face of the workpiece W. Therefore, in the steam supply step ACT40A, the sheet bonding apparatus 31 controls the heaters 52c provided in the side plates 52 so as to heat the steam to a higher temperature than that of the heater 57a provided in the top plate 51. Thereby, in the present embodiment, the portions of the thermal adhesive sheet F corresponding to the side faces of the workpiece W can also be bonded to the workpiece W as favorably as the portion corresponding to the top face of the workpiece W.

After the steam supply step ACT40A, the sheet bonding apparatus 31 opens the drain release valve 504 to open the space around the workpiece W to atmosphere. The pressure inside the upper chamber member 33 was made high due to the compressed air from the compressed air pump 42, in addition to which the steam was ejected at high pressure to around the workpiece W inside the sealed space S3 in the partition member 502. When opened to atmosphere, therefore, steam is discharged from the drain release valve 504 as soon as the drain release valve 504 is opened (ACT50A: release step). Thus the structure is such that steam is discharged using the same pipeline as that used for supplying steam to around the workpiece W. Thereby, one pipeline can be commonly used, which contributes to efficient use of space of the apparatus as a whole and to simplification of the structure.

After the release step ACT50A, the sheet bonding apparatus 31 deactivates the steam supply source 501 with both chambers 32 and 33 being closed. The apparatus 31 also stops heating by the heaters 57a and 52c which are provided to the top plate 51, the side plates 52, and the division plate 53, respectively. The sheet bonding apparatus 31 then moves the partition member 502 upwards. After that, the apparatus 31 opens the release valves 49a and 49b to open the space S2 inside the lower chamber member 32 and the space S1 inside the upper chamber member 33 to atmosphere at the same time. After that, the apparatus 31 separates the upper chamber member 33 from the lower chamber member 32 so as to open the top of the lower chamber member 32.

After removing the workpiece W from the placement table 34, the operator peels the peel layer F₂ from the workpiece w so that the picture of the picture layer F₃ is transferred to the surface of the workpiece W. The transfer-printed product having the picture layer F₃ transferred thereon is thus produced (ACT60A: peeling step) .

PROCESSOR 94 executes a sheet bonding program stored in MEMORY 81 and controls various parts of the sheet bonding apparatus 31 to realize the steps ACT20A to ACT50A.

In the sheet bonding apparatus 31, the partition member 502 is supported by the upper chamber member 33 so as to be movable up and down. Therefore, the workpiece W with the thermal adhesive sheet F closely attached thereto can be enclosed by the partition member 502 without moving the upper chamber member 33. Accordingly, the work efficiency of the picture transfer process is improved and the cycle time can be shortened.

The top plate 51 and the side plates 52 respectively have the heaters 57a and 52c provided thereto for heating the steam. The heater 57a provided to the top plate 51 and the heaters 52c provided to the side plate 52 are configured such that their temperatures can be controlled independently of each other. This provides temperature control in accordance with the type of the thermal adhesive sheet F or the shape of the workpiece W. Even when the temperature of the steam from the steam supply source 501 decreases, the heaters 57a and 52c can heat the steam so as to heat the thermal adhesive sheet F favorably.

In the second embodiment, too, the compressed air pump 42 is used to supply compressed air to the space S1 inside the upper chamber member 33. Instead, the space inside the upper chamber member 33 in which a vacuum was drawn may be opened to atmosphere by opening the release valve 49b. It is also possible, after opening the release valve 49b to open the space inside the upper chamber member 33 to atmosphere, to open the on/off valve 46 as well as to activate the compressed air pump 42, so as to supply more compressed air to the space inside the upper chamber member 33 at a predetermined timing.

If necessary, after closing both the chamber members 32 and 33 and before supplying steam to the space S3 inside the partition member 502, the partition member 502 may be moved slightly downwards and the heater 57a provided to the top plate 51 may be activated, in order to heat and soften the thermal adhesive sheet F in advance. Further, if necessary, before closing both the chamber members 32 and 33, the heater 57a provided to the top plate 51 may be activated in order to preheat the upper chamber member 33.

Further, some of the plurality of boredbolts 58 maybe replaced with non-bored bolts having no through holes therein as required, these non-bored bolts being attached to the apertures 56c of the steam plate 56. This enables adjustment of steam supply position in accordance with the shape of the workpiece.

In the sheet bonding apparatus 31, the bored bolts 58 or non-bored bolts are attached from the upper side of the bottom face 56a of the steam plate 56. Instead, the bored bolts 58 or non-bored bolts may be attached from the lower side of the bottom face 56a of the steam plate 56. In this case, too, to prevent water droplets from falling down to the space inside the partition member 502, the bored bolts 58 or non-bored bolts are preferably attached with the shaft portions 58c thereof protruding from the bottom face 56a of the steam plate 56. In this case, the bored bolts 58 or non-bored bolts can be assembled or replaced while the steam plate 56 and the heat disk 57 remain assembled, whereby the work efficiency can be improved.

In the first and second embodiments described above, the to-be-transferred layer was a picture layer F₃ with a picture formed thereon. The to-be-transferred layer need not necessarily be formed with a picture and may be plain or transparent.

In the first and second embodiments described above, the to-be-transferred layer was transferred onto the workpiece using the thermal adhesive sheet F (transfer film) having the peel layer F₂. In the present specification, it is alsopossible to use, instead of the thermal adhesive sheet F having the peel layer F₂, a thermal adhesive sheet having no peel layer but an adhesive layer laminated on one side of the base sheet (laminate sheet). In this case, the thermal adhesive sheet can be bonded to the workpiece without peeling the base sheet and yet the same effects as described above can be achieved. The thermal adhesive sheet in the present specification refers to a sheet having an adhesive layer laminated on one side of a base sheet.

In the first and second embodiments described above, of the spaces on both sides of the thermal adhesive sheet F, the pressure in the space S2 containing the workpiece W was made much lower than the pressure in the space S1 not containing the workpiece W so as to closely attach the thermal adhesive sheet F to the workpiece w. However, in the present specification the method of closely attaching the thermal adhesive sheet to the workpiece is not limited to those of the first and second embodiments described in this specification, and other suitable methods may be employed. For example, the present specification is intended to include other configurations in which the thermal adhesive sheet may be closely attached to the workpiece by pressing the sheet against the workpiece with a rubber member, or by holding the sheet between two members. Subsequently, in the present specification steam may be supplied to around the thermal adhesive sheet (workpiece) to heat the adhesive layer by conduction of heat from the steam through the base sheet, thereby to bond the thermal adhesive sheet to the workpiece.

The present specification is not intended to limit the installation of the opposing chamber members 2 and 3 to the vertical arrangement as in the first and second embodiments. The chamber members may be installed horizontally so as to face each other. The opposing chamber members may be installed in any direction. In the first and second embodiments, air was sucked from the chamber members 2 and 3 in the vacuum step ACT21 or ACT21A for closely attaching the thermal adhesive sheet F to the workpiece W. The present specification is intended to include other configurations in which the chamber members may be filled with any other gas and the thermal adhesive sheet may be closely attached to the workpiece by sucking this suitably selected gas.

While certain embodiments have been described, these embodiments have been presented by way of example only, and are not intended to limit the scope of invention. Indeed, the novel apparatus and methods described herein may be embodied in a variety of other forms. The accompanying claims and their equivalents are intended to cover such forms or modifications as would fall within the scope of the invention.

## Claims

1. A sheet bonding method for bonding a thermal adhesive sheet (F) having an adhesive layer (F4) on one side thereof to a workpiece (W), the method comprising:
a sheet placement step of providing a first chamber member (33) having one open side and second opposing chamber member (32) having one open side and containing the workpiece (W) therein and supplying a thermal adhesive sheet (F) between the open faces of the first chamber (33) and the second chamber member (32) with its adhesive layer (F4) facing the workpiece (W), and closing both the chamber members (32 and 33), with the thermal adhesive sheet ( F) being held between the open side of the first chamber (33) and the open side of the second chamber (32);
a closely attaching step of closely attaching the thermal adhesive sheet (F) to a surface of the workpiece (W) to closely attach the adhesive layer (F4) to the surface of the workpiece (W);
an enclosure step of enclosing the workpiece (W) by forming a closed space (S3) around the workpiece with a partition member (502), the partition member being disposed inside the first chamber member (33); and
a steam supply step of supplying steam to the closed space (S3), around the workpiece (W) by ejecting steam supplied from a steam supply source from an inner wall of the partition member (502) towards the workpiece (W) so as to heat the adhesive layer (F4) by conduction of heat from the steam, thereby to bond the thermal adhesive sheet (F) to the workpiece (W).

2. The sheet bonding method according to claim 1, wherein the first chamber member (3, 33) is an upper chamber member and the second chamber member (2, 32) is a lower chamber member.

3. The sheet bonding method according to claim 1 or 2, wherein the closely attaching step includes:
a vacuum step of sucking a gas from inside a first space (S1) formed in the first chamber member (33) by partitioning by the thermal adhesive sheet (F) stretched at a position separated from the workpiece (W) and a gas from inside a second space (S2) in the second chamber (32) containing the workpiece (W) to draw a vacuum in both spaces (S1, S2) and adjusting respective suction rates of the gases from both the spaces to correct deformation of the thermal adhesive sheet (F); and
a gas supply step of supplying a gas to the first space (S1) so as to closely attach the thermal adhesive sheet (F) to the surface of the workpiece (W).

4. The sheet bonding method according to claim 1, 2 or 3, comprising:
a release step of opening the space around the workpiece (W) to atmosphere after the steam supply step.

5. The sheet bonding method according to any one of claims 1 to 4, wherein the steam supply step includes, when the thermal adhesive sheet (F) is closely attached to the workpiece (W), supplying first steam to the space around the workpiece (W) from a direction perpendicular to a direction in which the thermal adhesive sheet (F) is stretched, and supplying second steam at a higher temperature than the first steam to the space around the workpiece (W) from a direction parallel to the direction in which the thermal adhesive sheet (F) is stretched.

6. The sheet bonding method according to any one of claims 1 to 5, wherein the thermal adhesive sheet (F) includes a base sheet (F1), and a peel layer (F2), a to-be-transferred layer (F3), and an adhesive layer (F4) sequentially laminated on the base sheet (F1).

7. A sheet bonding apparatus (31) for bonding a thermal adhesive sheet (F) having an adhesive layer (F4) on one side thereof to a workpiece (W), the apparatus comprising:
a close attachment apparatus (100A) that closely attaches the thermal adhesive sheet (F) to a surface of the workpiece (W) to closely attach the adhesive layer (F4) to the surface of the workpiece (W), and
a steam supply apparatus (50) that supplies steam to a space around the workpiece (W) so as to heat the adhesive layer (F4) by conduction of heat from the steam, thereby to bond the thermal adhesive sheet (F) to the workpiece (W), wherein
the close attachment apparatus (100A) comprises:
a first chamber member (33) having one open side;
a second chamber member (32) containing the workpiece (W) therein and having one open side, wherein the second chamber member (32) together with the first chamber member (33) holding the thermal adhesive sheet (F) with the adhesive layer (F4) facing the workpiece (W), when the first chamber member (33) and the second chamber member (32) are closed with the open sides of the chambers facing each other;
a pressure control apparatus (40);
the steam supply apparatus (50) comprising:
a steam supply source; and
a partition member (502), disposed inside the first chamber member (33), and arranged to encloses the workpiece (W) to form a closed space (S3) around the workpiece (W) and to ejects steam supplied from the steam supply source to from an inner wall thereof towards the workpiece within said closed space (S3).

8. The sheet bonding apparatus (31) according to claim 7 wherein
the pressure control apparatus (40) sucks a gas from a first space inside the first chamber member (33) and a gas from the second space inside the second chamber member (32) partitioned off from each other by the thermal adhesive sheet (F) to draw a vacuum in both spaces, and that supplies a gas thereafter to the first space so as to closely attach the thermal adhesive sheet (F) to the surface of the workpiece (W), wherein the pressure control apparatus (40) adjusts respective suction rates of the gases from the first and second spaces when drawing a vacuum in both the spaces by sucking the gases from the first and second spaces to correct deformation of the thermal adhesive sheet (F).

9. The sheet bonding apparatus (31) according to claim 7, wherein
the partition member (502) is supported by the first chamber member (33) so as to be movable up and down.

10. The sheet bonding apparatus (31) according to claim 7, wherein the partition member (502) includes a top plate covering an upper face of the workpiece (W) and a side plate covering a side face of the workpiece (W), the top plate and the side plate being formed with supply passages for supplying steam, and steam jet holes for ejecting steam to the space inside the partition member (502), respectively.

11. The sheet bonding apparatus (31) according to claim 10, comprising a drain release valve for opening the space inside the partition member (502) to atmosphere through the supply passages.

12. The sheet bonding apparatus (31) according to claim 10 or 11, wherein the top plate and the side plate are provided with heaters for heating the steam, respectively, and wherein the heater provided to the top plate and the heater provided to the side plate are configured such that temperature control thereof can be achieved independently of each other.

13. The sheet bonding apparatus (31) according to claim 12, wherein the heater provided to the side plate heats the steam to a higher temperature than that of the steam heated by the heater provided to the top plate when the partition member (502) supplies steam to the space around the workpiece (W).

14. The sheet bonding apparatus (31) according to claim 12, wherein the partition member (502) is provided with a far infrared ray ceramic coating on an inner surface thereof.

15. The sheet bonding apparatus (31) according to any one of claims 7 to 14, wherein the thermal adhesive sheet (F) includes a base sheet (F1), and a peel layer (F2), a to-be-transferred layer (F3), and an adhesive layer (F4) sequentially laminated on the base sheet (F1).

## Patentansprüche

1. Verfahren zum Verbinden einer thermischen Klebefolie (F), die auf ihrer einen Seite eine Klebschicht (F4) aufweist, mit einem Werkstück (W), umfassend die folgenden Schritte: ein Folienplazierungsschritt, wobei ein erster Kammerkörper (33), der eine offene Seite aufweist, und ein zweiter gegenüberliegender Kammerkörper (32), der eine offene Seite aufweist und das Werkstück (W) enthält, geschaffen werden und eine thermische Klebfolie (F) zwischen den offenen Seiten des ersten Kammerkörpers (33) und des zweiten Kammerkörpers (32) angeordnet wird, so daß die Klebschicht (F4) der Klebfolie dem Werkstück (W) zugewendet ist, und Schließen der beiden Kammerkörper (32) und (33), wobei die thermische Klebfolie (F) zwischen der offenen Seite der ersten Kammer (33) und der offenen Seite der zweiten Kammer (32) gehalten wird; ein Schritt der dichten Anbringung der thermischen Klebfolie (F) an einer Oberfläche des Werkstücks (W), um die Klebschicht (F4) mit der Oberfläche des Werkstücks (W) eng zu verbinden; ein Einschließungsschritt für das Werkstück (W) durch Bildung eines geschlossenen Raums (S3) rund um das Werkstück mit einem Abteilkörper (502), der im Inneren des ersten Kammerkörpers (32) angeordnet ist; und ein Dampfzufuhrschritt, in dem dem geschlossenen Raum (S3) rund um das Werkstück (W) Dampf zugeführt wird, indem Dampf von einer Dampf zuführenden Quelle an einer Innenwand des Abteilkörpers (502) gegen das Werkstück (W) gefördert wird, um dadurch die Klebfolie (F4) durch Wärmeableitung von dem Dampf zu erwärmen und damit die thermische Klebfolie (F) mit dem Werkstück (W) zu verbinden.

2. Verfahren zum Verbinden nach Anspruch 1, **dadurch gekennzeichnet, daß** der erste Kammerkörper (3, 33) ein oberer Kammerkörper ist und der zweite Kammerkörper (2, 32) ein unterer Kammerkörper ist.

3. Verfahren zum Verbinden nach Anspruch 1 oder 2, **dadurch gekennzeichnet, daß** zu dem Schritt des dichten Anbringens ein Vakuumschritt gehört, bei dem ein Gas aus dem Inneren eines ersten Raums (S1), der in dem ersten Kammerkörper (33) durch Abteilen mit Hilfe der thermischen Klebfolie (F) geformt wird, die an einer Stelle, welche von dem Werkstück (W) getrennt ist, gestreckt wird, sowie ein Gas aus dem Inneren eines zweiten Raums (S2) in der zweiten Kammer (32), die das Werkstück (W) enthält, gesaugt wird, um dadurch in beiden Räumen (S1, S2) ein Vakuum zu erzeugen und entsprechende Sauggeschwindigkeiten des Gases aus den beiden Räumen einzustellen, um die thermische Klebfolie (F) richtig zu verformen; sowie ein Gaszufuhrschritt, mit dem ein Gas dem ersten Raum (S1) so zugeführt wird, daß die thermische Klebfolie (F) dicht an der Oberfläche des Werkstücks (W) angebracht wird.

4. Verfahren zum Verbinden nach Anspruch 1, 2 oder 3, umfassend einen Entspannungsschritt, bei dem der Raum rund um das Werkstück (W) zur Atmosphäre nach dem Dampfzufuhrschritt geöffnet wird.

5. Verfahren zum Verbinden nach einem der Ansprüche 1 bis 4, **dadurch gekennzeichnet, daß** zu dem Dampfzufuhrschritt gehört, daß dann, wenn die thermische Klebfolie (F) dicht an dem Werkstück (W) angebracht wird, Dampf zunächst dem Raum rund um das Werkstück (W) aus einer Richtung lotrecht zu einer Richtung zugeführt wird, in der die thermische Klebfolie (F) gestreckt wird, und daß ein zweiter Dampf bei einer höheren Temperatur als der erste Dampf im Raum rund um das Werkstück (W) aus einer Richtung zugeführt wird, die parallel zu der Richtung verläuft, in der die thermische Klebfolie (F) gestreckt wird.

6. Verfahren zum Verbinden nach einem der Ansprüche 1 bis 5, **dadurch gekennzeichnet, daß** die thermische Klebfolie (F) eine Grundfolie (F1), eine Ablöseschicht (F2), eine Übertragungsschicht (F3) und eine Klebschicht (F4) aufweist, die aufeinanderfolgend auf der Grundfolie (F1) laminiert sind.

7. Folienverbindungsvorrichtung (31) zum Verbinden einer thermischen Klebfolie (F), die eine Klebschicht (F1) aufweist, auf ihrer einen Seite mit einem Werkstück (W), **gekennzeichnet durch** eine Anbringungsvorrichtung (100A), die die thermische Klebfolie (F) dicht auf einer Oberfläche des Werkstücks (F) anbringt, um auf diese Weise die Klebschicht (F4) mit der Oberfläche des Werkstücks (W) fest zu verbinden, und eine Dampfzufuhrvorrichtung (50), die einem Raum rund um das Werkstück (W) Dampf zuführt, um **dadurch** die Klebschicht (F4) mit Hilfe der von dem Dampf kommenden Wärme zu erwärmen und die thermische Klebfolie (F) mit dem Werkstück (W) zu verbinden, wobei die Vorrichtung (100A) zum dichten Anbringen folgende Teile aufweist: einen ersten Kammerkörper (33), der mit einer offenen Seite versehen ist; einen zweiten Kammerkörper (32), der das Werkstück (W) enthält und eine offene Seite besitzt, wobei der zweite Kammerkörper (32) zusammen mit dem ersten Kammerkörper (33) die thermische Klebfolie (F) so hält, daß die Klebschicht (F4) dem Werkstück (W) zugewendet ist, sobald der erste Kammerkörper (33) und der zweite Kammerkörper (32) mit den offenen Seiten der Kammern, die einander zugewendet sind, geschlossen sind; des weiteren aufweisend eine Drucksteuereinrichtung (40), eine Dampfzufuhrvorrichtung (50) mit einer Dampfzufuhrquelle; und einen Abteilkörper (502), der im Inneren des ersten Kammerkörpers (33) gelegen und so angeordnet ist, daß er das Werkstück (W) einschließt, um **dadurch** einen geschlossenen Raum (S3) rund um das Werkstück (W) zu bilden und Dampf, der von der Dampfzufuhrquelle zugeführt wird, von einer Innenwand des Raumes in Richtung auf das Werkstück innerhalb des geschlossenen Raumes (S3) auszublasen.

8. Folienverbindungsvorrichtung (31) nach Anspruch 7, **dadurch gekennzeichnet, daß** die Drucksteuervorrichtung (40) aus einem ersten Raum im Inneren des ersten Kammerkörpers (33) Gas ansaugt und aus dem zweiten Raum im Inneren des zweiten Kammerkörpers (32), die voneinander durch die thermische Klebfolie (F) getrennt sind, Gas ansaugt, um in beiden Räumen ein Vakuum zu erzeugen, und daß diese Vorrichtung danach dem ersten Raum Gas zuführt, um dadurch die thermische Klebfolie (F) dicht mit der Oberfläche des Werkstücks zu verbinden, wobei die Drucksteuervorrichtung (40) entsprechende Sauggeschwindigkeiten des Gases aus den ersten und zweiten Räumen einstellt, wenn in den beiden Räumen durch Absaugen des Gases aus dem ersten und dem zweiten Raum ein Vakuum erzeugt wird, um dadurch eine genaue Verformung der thermischen Klebfolie (F) zu erreichen.

9. Folienverbindungsvorrichtung (31) nach Anspruch 7, **dadurch gekennzeichnet, daß** der Abteilkörper (502) von dem ersten Kammerkörper (33) so getragen wird, daß er nach oben und nach unten beweglich ist.

10. Folienverbindungsvorrichtung (31) nach Anspruch 7, **dadurch gekennzeichnet, daß** der Abteilkörper (502) eine Kopfplatte aufweist, die eine obere Seite des Werkstücks (W) bedeckt, sowie eine Seitenplatte, die eine seitliche Seite des Werkstücks (W) bedeckt, wobei die Kopfplatte und die Seitenplatte mit Zufuhrkanälen ausgestattet sind, welche der Zuführung von Dampf dienen, bzw. mit Dampfausblaslöchern für das Ausstoßen von Dampf in den Raum innerhalb des Abteilkörpers (502).

11. Folienverbindungsvorrichtung (31) nach Anspruch 10, **gekennzeichnet durch** ein Entspannungsventil zum Öffnen des Raums in Inneren des Abteilkörpers (502) zur Atmosphäre **durch** die Zufuhrkanäle.

12. Folienverbindungsvorrichtung (31) nach Anspruch 10 oder 11, **dadurch gekennzeichnet, daß** die Kopfplatte und die Seitenplatte mit Erhitzern zur Erwärmung des Dampfes entsprechend versehen sind, und der für die Kopfplatte vorgesehene Erhitzer und der für die Seitenplatte vorgesehene Erhitzer so geartet sind, daß ihre Temperatursteuerung unabhängig voneinander ermöglicht wird.

13. Folienverbindungsvorrichtung (31) nach Anspruch 12, **dadurch gekennzeichnet, daß** der für die Seitenplatte vorgesehene Erhitzer den Dampf auf eine höhere Temperatur erhitzt als die der Dampf aufweist, der durch den Erhitzer erhitzt wird, welcher für die Kopfplatte vorgesehen ist, wenn der Abteilkörper (502) dem Raum rund um das Werkstück (W) Dampf zuführt.

14. Folienverbindungsvorrichtung (31) nach Anspruch 12, **dadurch gekennzeichnet, daß** der Abteilkörper (502) auf seiner inneren Oberfläche mit einer weitreichenden keramischen Infrarotstrahlbeschichtung versehen ist.

15. Folienverbindungsvorrichtung (31) nach einem der Ansprüche 7 bis 14, **dadurch gekennzeichnet, daß** die thermische Klebfolie (F) eine Grundfolie (F1) und eine Ablöseschicht (F2), eine Übertragungsschicht (F3) und eine Klebschicht (F4) aufweist, die aufeinanderfolgend auf der Grundfolie (F1) laminiert sind.

## Revendications

1. Procédé de collage de feuille pour coller une feuille adhésive thermique (F), ayant une couche adhésive (F4) sur un côté de celle-ci, sur une pièce (W), le procédé comprenant :
une étape de placement de feuille consistant à disposer un premier élément de chambre (33) ayant un côté ouvert et un second élément de chambre opposé (32) ayant un côté ouvert et contenant la pièce (W) à l'intérieur de celui-ci et à distribuer une feuille adhésive thermique (F) entre les faces ouvertes de la première chambre (33) et du second élément de chambre (32) avec sa couche adhésive (F4) tournée vers la pièce (W), et à fermer les deux éléments de chambre (32 et 33), avec la feuille adhésive thermique (F) maintenue entre le côté ouvert de la première chambre (33) et le côté ouvert de la seconde chambre (32) ;
une étape de liaison étroite consistant à lier étroitement la feuille adhésive thermique (F) à une surface de la pièce (W) pour lier étroitement la couche adhésive (F4) à la surface de la pièce (W) ;
une étape de fermeture consistant à enfermer la pièce (W) par formation d'un espace fermé (S3) autour de la pièce avec un élément de séparation (502), l'élément de séparation étant disposé à l'intérieur du premier élément de chambre (33) ; et
une étape de distribution de vapeur consistant à distribuer de la vapeur à l'espace fermé (S3), autour de la pièce (W) par éjection de vapeur, provenant d'une source de distribution de vapeur, d'une paroi intérieure de l'élément de séparation (502) vers la pièce (W) de façon à chauffer la couche adhésive (F4) par conduction de chaleur à partir de la vapeur, pour coller ainsi la couche adhésive thermique (F) à la pièce (W).

2. Procédé de collage de feuille selon la revendication 1, dans lequel le premier élément de chambre (3, 33) est un élément de chambre supérieur et le second élément de chambre (2, 32) est un élément de chambre inférieur.

3. Procédé de collage de feuille selon l'une des revendications 1 ou 2, dans lequel l'étape de liaison étroite comprend :
une étape de vide consistant à aspirer un gaz depuis l'intérieur d'un premier espace (S1) formé dans le premier élément de chambre (33) par séparation par la feuille adhésive thermique (F) étirée à une position séparée de la pièce (W) et un gaz depuis l'intérieur d'un second espace (S2) dans la seconde chambre (32) contenant la pièce (W) pour créer un vide dans les deux espaces (S1, S2) et à ajuster les taux d'aspiration respectifs des gaz à partir des deux espaces pour corriger une déformation de la feuille adhésive thermique (F) ; et
une étape de distribution de gaz consistant à distribuer un gaz au premier espace (S1) de façon à lier étroitement la feuille adhésive thermique (F) à la surface de la pièce (W).

4. Procédé de collage de feuille selon l'une des revendications 1, 2 ou 3, comprenant :
une étape de libération consistant à ouvrir l'espace autour de la pièce (W) à l'atmosphère, après l'étape de distribution de vapeur.

5. Procédé de collage de feuille selon l'une quelconque des revendications 1 à 4, dans lequel l'étape de distribution de vapeur comprend, lorsque la feuille adhésive thermique (F) est liée étroitement à la pièce (W), la distribution de première vapeur à l'espace autour de la pièce (W) à partir d'une direction perpendiculaire à une direction dans laquelle la feuille adhésive thermique (F) est étirée et la distribution de seconde vapeur, à une température plus élevée que celle de la première vapeur, à l'espace autour de la pièce (W) à partir d'une direction parallèle à la direction dans laquelle la feuille adhésive thermique (F) est étirée.

6. Procédé de collage de feuille selon l'une quelconque des revendications 1 à 5, dans laquelle la feuille adhésive thermique (F) comprend une feuille de base (F1) et une couche de pelage (F2), une couche à transférer (F3) et une couche adhésive (F4) stratifiées de façon séquentielle sur la feuille de base (F1).

7. Appareil de collage de feuille (31) pour coller une feuille adhésive thermique (F), ayant une couche adhésive (F4) sur un côté de celle-ci, sur une pièce (W), l'appareil comprenant :
un appareil de liaison étroite (100A) qui lie étroitement la feuille adhésive thermique (F) à une surface de la pièce (W) pour lier étroitement la couche adhésive (F4) à la surface de la pièce (W), et
un appareil de distribution de vapeur (50) qui distribue de la vapeur à un espace autour de la pièce (W) de façon à chauffer la couche adhésive (F4) par conduction de chaleur à partir de la vapeur, pour coller ainsi la feuille adhésive thermique (F) à la pièce (W), dans lequel :
l'appareil de liaison étroite (100A) comprend :
un premier élément de chambre (33) ayant un côté ouvert ;
un second élément de chambre (32) contenant la pièce (W) à l'intérieur de celui-ci et ayant un côté ouvert, le second élément de chambre (32) et le premier élément de chambre (33) maintenant la feuille adhésive thermique (F) avec la couche adhésive (F4) tournée vers la pièce (W), lorsque le premier élément de chambre (33) et le second élément de chambre (32) sont fermés avec les côtés ouverts des chambres tournés l'un vers l'autre ;
un appareil de régulation de pression (40) ;
l'appareil de distribution de vapeur (50) comprenant :
une source de distribution de vapeur ; et
un élément de séparation (502), disposé à l'intérieur du premier élément de chambre (33) et agencé pour enfermer la pièce (W) pour former un espace fermé (S3) autour de la pièce (W) et pour éjecter de la vapeur, fournie par la source de distribution de vapeur, d'une paroi intérieure de celui-ci vers la pièce à l'intérieur dudit espace fermé (S3).

8. Appareil de collage de feuille (31) selon la revendication 7, dans lequel :
l'appareil de régulation de pression (40) aspire un gaz à partir d'un premier espace à l'intérieur du premier élément de chambre (33) et d'un gaz à partir du second espace à l'intérieur du second élément de chambre (32) séparés l'un de l'autre par la feuille adhésive thermique (F) pour créer un vide dans les deux espaces, et qui distribue ensuite un gaz au premier espace de façon à lier étroitement la feuille adhésive thermique (F) à la surface de la pièce (W), l'appareil de régulation de pression (40) ajustant les taux d'aspiration respectifs des gaz à partir des premier et second espaces lors de la création d'un vide dans les deux espaces par aspiration des gaz à partir des premier et second espaces pour corriger une déformation de la feuille adhésive thermique (F).

9. Appareil de collage de feuille (31) selon la revendication 7, dans lequel :
l'élément de séparation (502) est supporté par le premier élément de chambre (33) de façon à être mobile vers le haut et vers le bas.

10. Appareil de collage de feuille (31) selon la revendication 7, dans lequel l'élément de séparation (502) comprend une plaque supérieure recouvrant une face supérieure de la pièce (W) et une plaque latérale recouvrant une face latérale de la pièce (W), la plaque supérieure et la plaque latérale comportant des passages de distribution pour distribuer de la vapeur, et des trous d'éjection de vapeur pour éjecter de la vapeur à l'espace à l'intérieur de l'élément de séparation (502), respectivement.

11. Appareil de collage de feuille (31) selon la revendication 10, comprenant une valve de purge pour ouvrir l'espace à l'intérieur de l'élément de séparation (502) à l'atmosphère à travers les passages de distribution.

12. Appareil de collage de feuille (31) selon l'une des revendications 10 ou 11, dans lequel la plaque supérieure et la plaque latérale sont munies d'éléments chauffants pour chauffer la vapeur, respectivement, et l'élément chauffant équipant la plaque supérieure et l'élément chauffant équipant la plaque latérale étant configurés de telle sorte que la régulation de température de ceux-ci peut être obtenue indépendamment l'un de l'autre.

13. Appareil de collage de feuille (31) selon la revendication 12, dans lequel l'élément chauffant équipant la plaque latérale chauffe la vapeur à une température plus élevée que celle de la vapeur chauffée par l'élément chauffant équipant la plaque supérieure lorsque l'élément de séparation (502) distribue de la vapeur à l'espace autour de la pièce (W).

14. Appareil de collage de feuille (31) selon la revendication 12, dans lequel l'élément de séparation (502) comporte un revêtement céramique à infrarouge lointain sur une surface intérieure de celui-ci.

15. Appareil de collage de feuille (31) selon l'une quelconque des revendications 7 à 14, dans lequel la feuille adhésive thermique (F) comprend une feuille de base (F1) et une couche de pelage (F2), une couche à transférer (F3) et une couche adhésive (F4) stratifiées de façon séquentielle sur la feuille de base (F1).
